Europäisches Patentamt

(19) European Patent Office

Office européen des brevets

(11) Publication number : **0 608 014 A2**

# (12) EUROPEAN PATENT APPLICATION

(21) Application number : **94200049.8**

(22) Date of filing : **11.01.94**

(51) Int. Cl.$^5$ : **G11B 20/10**, G11B 20/20, G11B 15/52

(30) Priority : **20.01.93 EP 93200142**

(43) Date of publication of application :
**27.07.94 Bulletin 94/30**

(84) Designated Contracting States :
**AT DE FR GB**

(71) Applicant : **PHILIPS ELECTRONICS N.V.**
**Groenewoudseweg 1**
**NL-5621 BA Eindhoven (NL)**

(72) Inventor : **Kahlman, Josephus Arnoldus**
**Henricus Maria**
**c/o INT. OCTROOIBUREAU B.V.,**
**Prof. Holstlaan 6**
**NL-5656 AA Eindhoven (NL)**

(74) Representative : **van der Kruk, Willem**
**Leonardus et al**
**INTERNATIONAAL OCTROOIBUREAU B.V.,**
**Prof. Holstlaan 6**
**NL-5656 AA Eindhoven (NL)**

(54) Arrangement for reproducing n digital signals from n adjacent tracks on a record carrier.

(57)    For the clock extraction from n digital signals read from each of n tracks ($T_{a,l}$ to $T_{a,n}$) there are provided n phase-locked loops (13.l to 13.n). In order to compensate for speed variations in the speed of transport of the record carrier (20) there is provided an additional frequency control system (22, 19.l to 19.n). This system derives a control signal which is a measure of the speed variations, which control signal is applied to the voltage-controlled oscillators (21.l to 21.n) of all the phase-locked loops as a common control signal.

FIG.1

EP 0 608 014 A2

The invention relates to an arrangement for reproducing n digital signals from n adjacent tracks on a record carrier, which arrangement comprises
- read means comprising n read heads, each having an output, for reading n information signals from the n tracks and supplying said information signals to the outputs,
- n detection means having inputs coupled to the outputs of the n read heads, for deriving n digital signals from the n information signals read from tracks and supplying said digital signals to outputs,
- n phase-locked loops having inputs coupled to the n outputs of the read heads, each phase-locked loop comprising a phase comparator having a first input coupled to the input of the phase-locked loop, having a second input and having an output, a voltage-controlled oscillator having an input coupled to the output of the phase comparator and having an output for supplying a clock signal of a given frequency, which output is coupled to the second input of the phase comparator. Such arrangements are known, for example, in the form of magnetic-tape recorders of the SDAT or the DCC type.

These recorders are capable of reading magnetic tapes on which digital audio has been recorded in a plurality of longitudinal tracks. The result is that music of substantially CD quality can be reproduced. The magnetic-tape recorder of the DCC type has come onto the market recently and is intended as a new digital cassette recorder standard to replace the current Compact Cassette standard.

For the consumer market it has also been envisaged to provide such an apparatus for portable use and for use in car radios. This imposes additional requirements on the immunity of such apparatus to mechanical vibrations and shocks, in order to ensure an audio reproduction of substantially CD quality.

It is an object of the invention to provide an arrangement having an improved immunity to vibrations and shocks.

The arrangement is characterized in that the arrangement comprises a control signal generator for deriving from the n information signals a control signal which is a measure of the deviation of the speed of transport of the record carrier relative to the read means from the nominal speed of transport of the record carrier relative to the read means, and for supplying said control signal to an output, and the arrangement further comprises means for applying the control signal to the input of the n voltage-controlled oscillators.

The invention is based on the recognition of the following fact. For the clock extraction during readout of an information signal from a track on the record carrier a phase-locked loop is used. Mechanical vibrations and shocks result in variations of the speed of a read head relative to the track. The phase-locked loop should have a bandwidth narrow enough to be immune to the noise present in the input signal applied to the loop and, conversely, the bandwidth should be so large that the loop is still capable of following the speed variations of the tape. In practice, an optimum bandwidth for the loop is determined for which the loop operates correctly. However, it is found that in the case of shocks the loop frequently comes out of lock. However, a more limited bandwidth of the phase-locked loop again means that it is more difficult to track the normal speed variations of the tape. It is then known *per se* to extend the lock-in range of a phase-locked loop by the addition of a frequency control loop.

In accordance with the present invention the speed of the read head relative to the track is now determined for each of the n tracks. This enables the deviation of this speed from the nominal speed of the read head relative to the track to be determined. In addition, it is assumed that the speed variations are the same for all the tracks. Averaging over the n values thus obtained yields a control signal which is a measure of the speed variation in the speed of transport of the record carrier relative to the read means. This control signal, which may be regarded as a frequency control signal, is subsequently applied to the voltage-controlled oscillators of all the phase-locked loops. Since the information from all the n tracks is used for this it is possible to derive such a control signal that the loop responds more rapidly to speed variations. The frequency control proposed here differs from the above-mentioned frequency controls known from the literature in that in the present case only feed-forward control is used whereas the known frequency controls employ feedback. Consequently, the present arrangement cannot give rise to false-lock problems or deterioration of the signal-noise ratio owing to large control bandwidths.

For deriving the control signal the arrangement may be characterized further in that the control signal generator is adapted to derive from each of the n digital signals an auxiliary signal, said auxiliary signal being a measure of the bit rate in each digital signal, and comprises a unit for deriving the control signal from the n auxiliary signals. This is because the bit rate in the signal read is a direct measure of the speed of transport of the record carrier relative to the read means. The control signal can subsequently be derived from the difference between the actual bit rate and the nominal bit rate, said nominal bit rate being 96 kb/s in the case of DCC, by averaging over the n values thus obtained.

For determining the bit rate in the signal read from a track the arrangement may be characterized in that, for deriving an auxiliary signal from the digital signal from a track, the control signal generator comprises a pulse generator for generating pulses of a frequency $m.f_b$, in which $f_b$ is the nominal bit rate in the digital signal from the track, and further comprises a counter for counting the number of pulses from the pulse generator which appear between two signal transitions in the digital signal read from the track, and the control signal generator is adapted to derive the auxiliary signal from the number of pulses. By counting the number of pulses the time between the two transitions is determined and the number of bits situated between two transitions can be derived. Subsequently, the bit time for the bits can be determined by dividing the time between the transitions by the number of bits between the transitions. The control signal can then be derived from the difference between the actual bit time and the nominal bit time.

In a first example the counter may be adapted to count the number of pulses appearing between a signal transition of a given polarity in the digital signal and a directly succeeding signal transition of opposite polarity.

However, in a second example, in order to be less dependent on d.c. variations in the signal being read it is preferred to count the number of pulses appearing between a signal transition of a given polarity in the digital signal and a directly succeeding signal transition of the same polarity.

In a further embodiment the counter is adapted to count a first number of pulses appearing between a signal transition of a given polarity in the digital signal and a directly succeeding signal transition of the same polarity, and is adapted to count a second number of pulses appearing between a signal transition of a opposite polarity in the digital signal and a directly succeeding signal transition of said opposite polarity, and the control signal generator is adapted to derive the auxiliary signal from the first and the second number by averaging said numbers. Thus, the control signal is derived even more accurately.

Preferably, the spacing between the two signal transitions, expressed as the number of bits situated between the signal transitions, does not exceed a given number. If too long run lengths in the signal being read would taken into account to derive the control signal the deviation of the time between two transitions as a result of speed variations of the record carrier could become greater than the bit time, i.e. $T_b + dt$, where $T_b$ is the nominal bit time. Now no distinction can be made between the situation in which $N_1$ bits are situated between the transitions, the deviation being $T_b + dt$, and the situation in which $N_1 + 1$ bits are situated between the transitions and the deviation is $dt$. In order to avoid these situations only run lengths with a limited number of bits are taken into account. The criterion is then that the variation in time of the greatest run length as a result of speed variations is less than half a bit cell.

The frequency measurement effected in the control signal generator in order to obtain an auxiliary signal is disturbed increasingly by variations in channel properties as the spacing between consecutive edges in the signal on which the frequency measurement is based decreases. Therefore, comparatively small run lengths are preferably ignored in the frequency measurement.

The arrangement may be characterized further in that the connections between the outputs of the read heads and the inputs of the phase comparators each include a delay means having the same delay time. This compensates for the time delay owing to the derivation of the control signal in the control signal generator.

Embodiments of the invention will now be described in more detail, by way of example, with reference to the drawings. In the drawings

Figure 1 shows an embodiment of the arrangement,

Figure 2 shows an example of the control signal generator of the arrangement shown in Figure 1,

Figure 3 shows two signals appearing in the circuit shown in Figure 2,

Figure 4 shows another example of the control signal generator,

Figure 5 shows yet another example of the control signal generator, and

Figure 6 shows a number of signals appearing in the circuit shown in Figure 5.

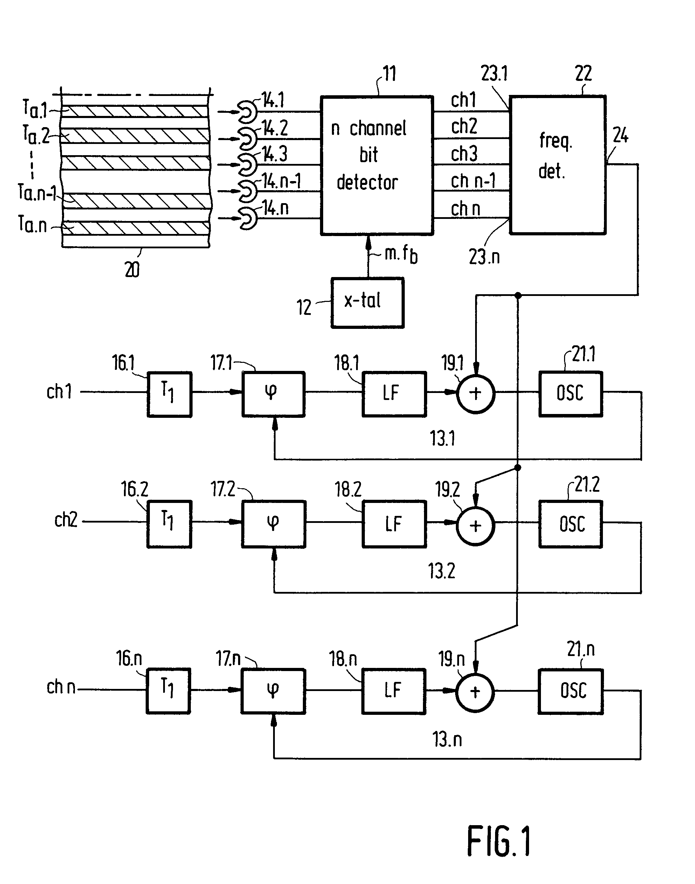

Figure 1 shows an arrangement intended for reading a digital signal from n tracks $T_{a.1}$ to $T_{a.n}$ which extend adjacent one another in the longitudinal direction of a magnetic record carrier 20 in the form of a tape. Only one half of the record carrier is shown. The arrangement has read means comprising n read heads 14.1 to 14.nj which derive an analog signal from the n tracks. The n analog signals are applied to an n-channel bit decoder 11. The analog signals are sampled and converted into a binary signal under the influence of a clock signal of a clock frequency $m.f_b$ applied to the bit detector 11 by a fixed oscillator 12.

From each of the n digital signals a clock frequency is derived for the purpose of bit detection. To this end the resulting digital signals are applied to a phase-locked loop, n such loops 13.1 to 13.n being provided. For each channel ch i of the channels ch 1 to ch n the corresponding digital signal is applied to a first input of the phase comparator via a delay means 16.i, which delays the digital signal by a time interval $T_1$. The output of the phase comparator 17.i is coupled to the control signal input of a voltage-controlled oscillator 21.i via a loop filter 18.i. The oscillator 21.i may be constructed as a discrete time oscillator.

The output of the oscillator 21.i is coupled to a second input of the phase comparator 17.i.

In accordance with the invention there is also provided a control signal generator 22. The control signal generator 22 is adapted to derive a control signal from the n digital signals, which for this purpose are applied to n inputs 23.1 to 23.n of the generator 22, and to supply it to an output 24, which control signal is a measure of the deviation of the speed of transport of the record carrier 20 relative to the read means 14.1 to 14.n from the nominal speed of transport of the record carrier 20 relative to the read means. The arrangement further comprises means for applying the control signal to the input of the n voltage-controlled oscillators 21.1 to 21.n. For this purpose these means comprise signal combination units 19.1 to 19.n. The signal combination units may be constructed as adders and have a first input coupled to the output 24 of the control signal generator 22, a second input coupled to the output of a loop filter 18.i, and an output coupled to the control signal input of the oscillator 21.i.

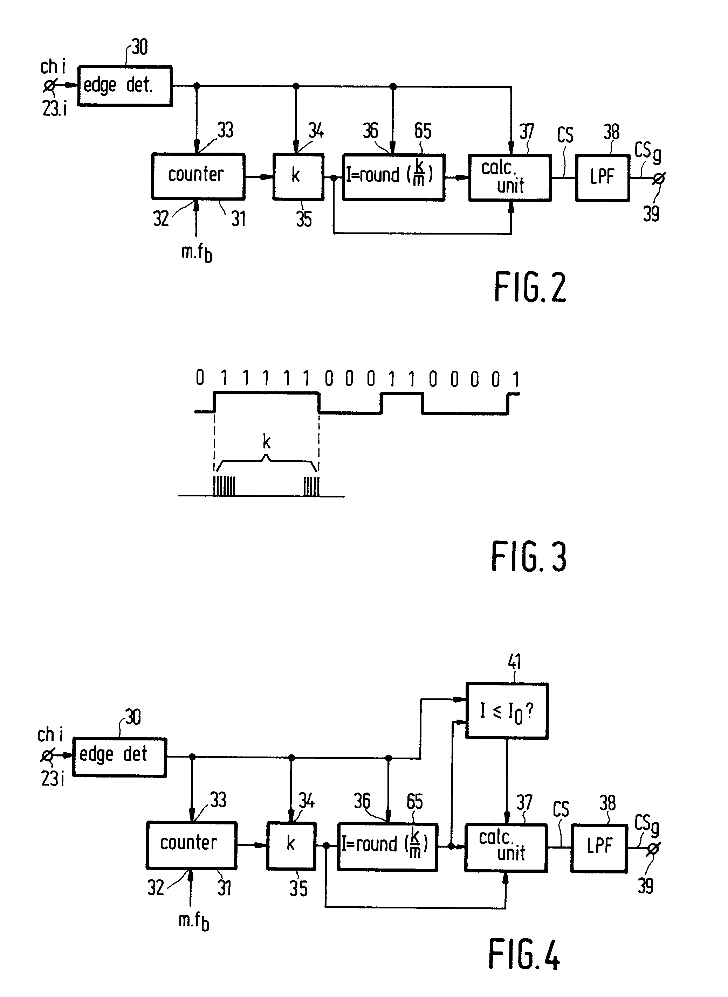

Figure 2 shows an example of a part of the control signal generator 22. Figure 2 shows that the generator 22 has an input 23.i coupled to an input of an edge detector 30. The output of the edge detector 30 is coupled to an input of a counter 31. The clock pulses from the fixed oscillator 12 with a frequency $m.f_b$, $f_b$ being the nominal bit rate, are applied to a clock signal input 32 of the counter 31. The edge detector 30 supplies pulses upon detection of an edge in the digital signal applied to its input. Figure 3 shows such a digital signal comprising a bit string 0111110001100001. Upon receipt of a pulse from the detector 30 the count of the counter 31 is set to 0 and subsequently this counter starts to count the number of clock pulses applied to the input 32. This counting of clock pulses continues until another pulse on the input 33 indicates the appearance of the next edge in the digital signal. This pulse is also applied to a load input 34 of a memory 35, which stores the count k of the counter 31 under the influence of this pulse. Subsequently, the counter 31 is reset to 0 and is re-started. The count k at the end of a run length, as is shown in Figure 3, is related to the number of bits between two transitions. In the present example the number of bits is 5. For a speed of transport of the record carrier equal to the nominal speed of transport the number k of clock pulses should then be equal to 5.m. Since the speed of transport may deviate from the nominal speed of transport the actual bit rate $f_{bre}$ will deviate from the nominal bit rate $f_b$, so that the number of clock pulses counted by the counter 31 between the two transitions generally differs from 5.m.

To determine the number of bits the number k is applied to a dividing and rounding unit 65. Under the influence of the detection signal from the detector 30, which signal is applied to the control signal input 36 of the unit 65, the number k is divided by m in the unit 65 and the result is subsequently rounded off to the nearest integer l. In the present example l would be 5. Subsequently, the numbers l and k are applied to a calculation unit 37 which, under the influence of the detection signal from the detector 30, derives a control signal cs in accordance with the following formula:

$$cs = l.m - 1/k.m$$

The control signal should be a measure of the speed variation of the record carrier relative to the nominal transport speed of the record carrier. As stated hereinbefore, the nominal speed of transport of the record carrier results in a bit rate $f_b$ in the signal being read. However, as a result of the speed variation the bit rate in the signal being read is $f_{bre}$. Consequently, the quantity $f_{bre} - f_b$ is a measure of the speed variation of the record carrier.

Now the following relation holds:

$$f_{bre} - f_b = 1/T_{re} - 1/T_b,$$

where $T_{re}$ is the actual bit time and $T_b$ is the nominal bit time. Expressed in k, l and m this means that

$$f_{bre} - f_b = l/k - 1/m,$$

yielding the above formula for cs.

The calculation unit 37 can also derive cs in another way, i.e. by determining the relative variation of the speed and hence the relative variation of the bit rate. This means:

$$cs = f_{bre}/f_b.$$

This yields cs = ml/k.

It is obvious that the application of the detection signal from the detector 30 to the various elements is effected with the correct delay, to enable the count k to be stored in the memory 35 before the counter 31 is set to zero. Subsequently, the value l can be determined in the unit 65, after which the quantity cs is calculated in the unit 37.

After low-pass filtering in the filter 38 the low-pass-filtered signal $cs_g$ is applied to the output 39.

In this way a signal $cs_g$ is derived for each of the tracks. Subsequently, all the n values for $cs_g$ are applied to an averager (not shown). This averager derives the average value from the n signals $cs_g$ and applies it to the output 24 of the generator 22.

For great run lengths between two consecutive transitions in the digital signal in Figure 3 a situation may arise in which the variation in time, and hence the variation in the count k of the number of clock pulses from the generator 12 counted between two consecutive transitions, becomes greater than m/2. In this case the determination of the number of bits in the unit 65 will yield too large or too small a value l, resulting in an incorrect value for cs.

Figure 4 shows an improved version of the circuit shown in Figure 2, which allows for this problem. The circuit shown in Figure 4 in addition comprises a comparator 41 having an input coupled to the output of the unit 65 and having a control signal input coupled to the output of the detector 30. At the instant at which an edge in the digital signal is detected and the unit 65 has determined the value l, which indicates the number of bits between the edge and the directly preceding edge, the comparator 41 checks whether this number I does not exceed a certain value $I_0$. $I_0$ is selected in such a manner that for a number $I_0$ of bits between two consecutive edges the deviation of the number of clock pulses k relative to $m.I_0$ is smaller than m/2. If the comparator 41 has ascertained that the requirement of I smaller than or equal to $I_0$ is met, the comparator 41 produces on its output the control signal on the basis of which the calculation unit 37 derives the signal cs from I, k and m. In the other case the comparator does not generate a control signal and, consequently, the unit 37 does not derive a new value for cs.

A further improvement of the circuit shown in Figure 4 can be obtained if the comparator 41 also compares I with the value $I_{min}$ and generates a control signal on its output only when I complies with: $I_{min} < I \leq I_0$. $I_{min}$ may be, for example, 1 or 2. As stated hereinbefore, the detection gives an inaccurate measurement result and hence an inaccurate value for the count k particularly for short run lengths. This is particularly in connection with the presence of the equalizer (not shown), which boosts the high frequencies relative to the lower frequencies in the signal being read. Therefore, it is not sensible to derive a control signal starting from values for k based on a measurement in the case of short run lengths, because such a control signal will contain a substantial error component.

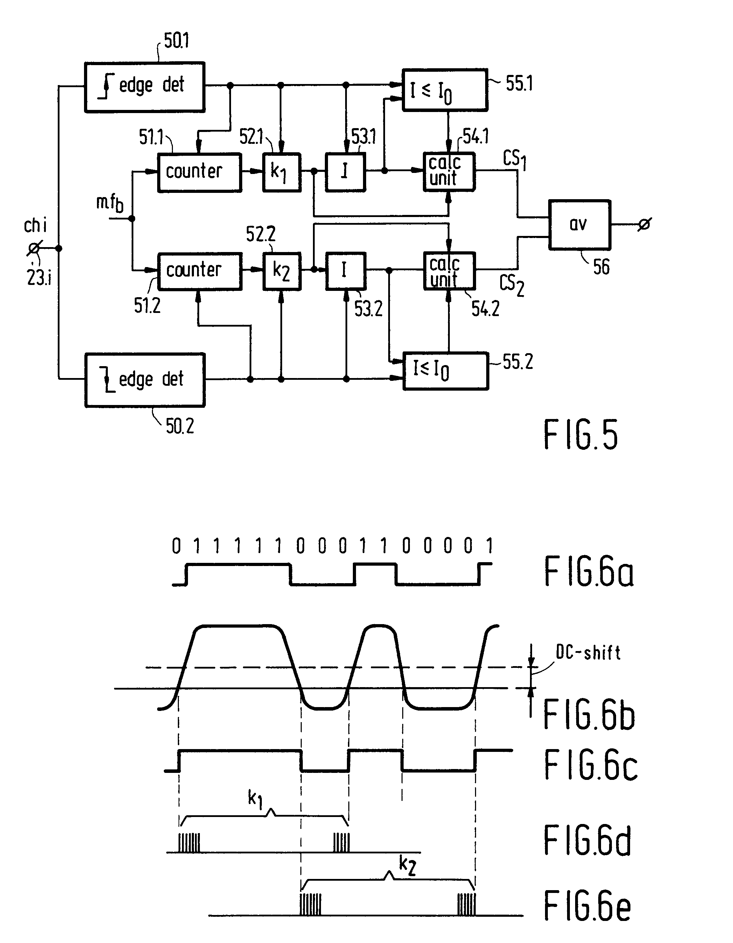

Figure 5 shows another example of the control signal generator 22. The circuit shown in Figure 5 comprises an edge detector 50.1 for detecting rising edges in the digital signal applied to the input 23.i. The circuit also comprises a counter 51.1 for counting the number of clock pulses ($k_1$) from the clock generator 12 in Figure 1 which are generated in the time interval between two consecutive rising edges in the digital signal. At the end of the interval this number $k_1$ is loaded into a memory 52.1. The unit 53.1 derives from $k_1$ the number of bits I within this time interval. The comparator 55.1 checks whether I does not exceed a certain value $I_0$. If this value is not exceeded the unit 54.1 calculates a control signal $cs_1$. In fact, the operation of the circuit shown in Figure 5, as described so far, is similar to that of the circuit shown in Figure 4, the difference being that in the present case the number of clock pulses is counted in time intervals situated between two directly succeeding edges of the same polarity. In Figure 6 this number is denoted by $k_1$.

The advantage of the circuit shown in Figure 5, as described so far, resides in that fact that in the present case the derivation of the signal $cs_1$ is less susceptible to d.c. variations in the signal read. Figure 6a shows the original digital signal. A d.c. shift during reading results in an analog signal as shown in Figure 6b. After digitization the signal shown in Figure 6c is obtained. The time intervals for which the signal in Figure 6c is "high" are extended in comparison with the corresponding time intervals in Figure 6a. The time intervals for which the signal in Figure 6c is "low" are reduced in comparison with the corresponding time intervals in Figure 6a. In the present case the speed of transport of the record carrier is assumed to have the nominal value.

Determining the control signal cs on the basis of time intervals in which the signal is "high" would now result in a control signal indicating too low a speed of transport of the record carrier. Conversely, determining the control signal cs on the basis of time intervals in which the signal is "low" would now result in a control signal indicating too high a speed of transport of the record carrier. By now selecting an interval equal to the interval between two consecutive rising edges the control signal cs can be derived better. It is evident that it is not necessary to select a time interval between two directly succeeding rising edges. It would also be possible to take as the counting interval the time interval between a rising edge and the second rising edge following it.

Instead of rising edges it would also be possible to detect the falling edges.

Figure 5 also shows the detection of the falling edges. For this purpose the arrangement shown in Figure 5 further comprises an edge detector 50.2 for detecting falling edges in the digital signal applied to the input 23.i. The arrangement further comprises a counter 51.2 for counting the number of clock pulses ($k_2$) from the clock generator 12 in Figure 1 which are generated in the time interval between two consecutive falling edges in the digital signal. At the end of the interval this number $k_2$ is loaded into a memory 52.2. The unit 53.2 derives from $k_2$ the number of bits I within this time interval. The comparator 55.2 checks whether I does not exceed a certain value $I_0$. If this is the case the unit 54.2 calculates a control signal $cs_2$. In fact, this part of the circuit shown in Figure 5 also operates similarly to the circuit shown in Figure 4, the difference being that in the present case the number of clock pulses is counted in time intervals situated between two directly succeeding falling edges. In Figure 6 this number is denoted by $k_2$. The arrangement further comprises an averager 56, which derives from the two signals $cs_1$ and $cs_2$ the control signal cs which is applied to the aforementioned averager which averages all the n values cs for the n channels.

The invention has the advantage that the bandwidth of the phase-locked loops 13.i can be comparatively small because speed variations of the record carrier are compensated for the additional control system, which may be regarded as a frequency control system. The phase control system merely has to compensate for the phase difference between the individual channels. This improves the behaviour of the phase-locked loops.

Moreover, since n times as many signal transitions are used to determine the control signal in the generator 22, the signal-noise ratio in the control signal is higher.

It is obvious that various implementations of the arrangements described herein are possible. In this respect it is to be noted that not all the elements as indicated in the circuits shown in Figure 2, 4 or 5 should be provided n times (or 2n times). The functions which can be time-multiplexed for the n channels then in principle require one element, which then operates in time multiplex.

Moreover, it is to be noted that it is not necessary for the bit rates of the signals in the tracks to be the same for all the tracks. The bit rates in different tracks may differ from one another, in which case allowance is to be made for this in the frequency detector 22 in that the reference frequency to be applied to the counter 32 is adapted.

It is to be noted also that the control signal supplied to the output 24 of the frequency detector 22 can be used as a control signal for the direct control of the tape-transport speed control system. This enables a rapidly operating transport-speed control to be realized.

**Claims**

1. An arrangement for reproducing n digital signals from n adjacent tracks on a record carrier, which arrangement comprises
   - read means comprising n read heads, each having an output, for reading n information signals from the n tracks and supplying said information signals to the outputs,
   - n detection means having inputs coupled to the outputs of the n read heads, for deriving n digital signals from the n information signals read from tracks and supplying said digital signals to outputs,
   - n phase-locked loops having inputs coupled to the n outputs of the read heads, each phase-locked loop comprising a phase comparator having a first input coupled to the input of the phase-locked loop, having a second input and having an output, a voltage-controlled oscillator having an input coupled to the output of the phase comparator and having an output for supplying a clock signal of a given frequency, which output is coupled to the second input of the phase comparator, characterized in that the arrangement comprises a control signal generator for deriving from the n information signals a control signal which is a measure of the deviation of the speed of transport of the record carrier relative to the read means from the nominal speed of transport of the record carrier relative to the read means, and for supplying said control signal to an output, and the arrangement further comprises means for applying the control signal to the inputs of the n voltage-controlled oscillators.

2. An arrangement as claimed in Claim 1, characterized in that the control signal generator is adapted to derive from each of the n digital signals an auxiliary signal, said auxiliary signal being a measure of the bit rate in each digital signal, and comprises a unit for deriving the control signal from the n auxiliary signals.

3. An arrangement as claimed in Claim 1, characterized in that, for deriving an auxiliary signal from the digital signal from a track, the control signal generator comprises a pulse generator for generating pulses of a frequency $m.f_b$, in which $f_b$ is the nominal bit rate in the digital signal from the track, and further comprises a counter for counting the number of pulses from the pulse generator which appear between two signal transitions in the digital signal read from the track, and the control signal generator is adapted to derive the auxiliary signal from the number of pulses.

4. An arrangement as claimed in Claim 3, characterized in that the counter is adapted to count the number of pulses appearing between a signal transition of a given polarity in the digital signal and a directly succeeding signal transition of opposite polarity.

5. An arrangement as claimed in Claim 3, characterized in that the counter is adapted to count a first number of pulses appearing between a signal transition of a given polarity in the digital signal and a directly succeeding signal transition of the same polarity, and is adapted to count a second number of pulses appearing between a signal transition of a opposite polarity in the digital signal and a directly succeeding signal transition of said opposite polarity, and the control signal generator is adapted to derive the auxiliary signal from the first and the second number by averaging said numbers.

6. An arrangement as claimed in Claim 3, 4 or 5, characterized in that the spacing between the two signal transitions, expressed as the number of bits situated between the signal transitions, does not exceed a given number.

7. An arrangement as claimed in Claim 6, characterized in that the spacing between the two signal transitions, expressed as the number of bits situated between the signal transitions, is greater than 1.

8. An arrangement as claimed in any one of the preceding Claims, characterized in that the connections between the outputs of the read heads and the inputs of the phase comparators each include a delay means having substantially the same delay time.

9. An arrangement as claimed in Claim 1, comprising transport means for the transport of the record carrier, characterized in that the means have a control signal input, the output of the control signal generator is coupled to said control signal input, and the transport means are adapted to transport the record carrier so as to reduce said deviation in response to the control signal applied to the control signal input.

FIG.1

ch i
23.i

edge det. 30

counter 33
32    31

m.f_b

k 34
35

$I = \text{round}\left(\frac{k}{m}\right)$ 36  65

calc. unit 37

CS

LPF 38

CS_g
39

FIG.2

0  1  1  1  1  1  0  0  0  1  1  0  0  0  0  1

k

FIG.3

41
$I \leq I_0 ?$

ch i
23i

edge det 30

counter 33
32    31

m.f_b

k 34
35

$I = \text{round}\left(\frac{k}{m}\right)$ 36  65

calc. unit 37

CS

LPF 38

CS_g
39

FIG.4

FIG.5

0 1 1 1 1 1 0 0 0 1 1 0 0 0 0 1

FIG.6a

FIG.6b

FIG.6c

FIG.6d

FIG.6e

DC-shift

$k_1$

$k_2$